(19) Europäisches Patentamt
European Patent Office
Office européen des brevets

(11) **EP 3 898 277 B1**

(12) **FASCICULE DE BREVET EUROPEEN**

(45) Date de publication et mention de la délivrance du brevet:
**11.10.2023  Bulletin 2023/41**

(21) Numéro de dépôt: **19839649.1**

(22) Date de dépôt: **12.12.2019**

(51) Classification Internationale des Brevets (IPC):
***B60C 9/06*** *(2006.01)*

(52) Classification Coopérative des Brevets (CPC):
**B60C 9/06;** B60C 2009/0253; B60C 2009/0416;
B60C 2009/0425; B60C 2009/0433; B60C 2200/065

(86) Numéro de dépôt international:
**PCT/FR2019/053035**

(87) Numéro de publication internationale:
**WO 2020/128243 (25.06.2020 Gazette 2020/26)**

(54) **ARMATURE DE CARCASSE D'UN PNEUMATIQUE POUR VEHICULE LOURD DE TYPE GENIE CIVIL**

KARKASSENVERSTÄRKUNG FÜR EINEN REIFEN EINES SCHWERLASTBAUFAHRZEUGS

CARCASS REINFORCEMENT FOR A TYRE OF A HEAVY DUTY CIVIL ENGINEERING VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2018  FR 1873044
29.01.2019  FR 1900773**

(43) Date de publication de la demande:
**27.10.2021  Bulletin 2021/43**

(73) Titulaire: **COMPAGNIE GENERALE DES ETABLISSEMENTS MICHELIN
63000 Clermont-Ferrand (FR)**

(72) Inventeurs:
• **BARBARIN, François
63040 Clermont-Ferrand Cedex 9 (FR)**

• **REIX, Olivier
63040 Clermont-Ferrand Cedex 9 (FR)**
• **PATAUT, Gaël
63040 Clermont-Ferrand Cedex 9 (FR)**

(74) Mandataire: **Le Cam, Stéphane Georges Elie
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
**GB-A- 935 755     US-A- 3 542 111**

**Description**

La présente invention a pour objet un pneumatique radial, destiné à équiper un véhicule lourd de type génie civil, et concerne plus particulièrement l'armature de carcasse d'un tel pneumatique.

Typiquement un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 35 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet. Chaque armature est constituée de couches composites comprenant des renforts parallèles enrobés dans un mélange élastique.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603. Les documents US 3 542 111 A et GB 935 755 A peuvent être également cités en tant qu'art antérieur.

On définit également, en tout point de la courbe contrainte-allongement d'un renfort métallique, un module en extension, exprimé en GPa, qui représente la pente de la droite tangente à la courbe contrainte-allongement en ce point. En particulier, on appelle module élastique en extension ou module d'Young, le module en extension de la partie linéaire élastique de la courbe contrainte-allongement.

Dans la partie linéaire de la courbe force-allongement du renfort, on définit la rigidité du renfort métallique comme étant la pente de la courbe force-allongement, et la rigidité de la couche composite comme étant le rapport de la rigidité du renfort métallique sur le pas de la couche, c'est-à-dire la distance entre les centres de deux renforts consécutifs.

Parmi les renforts métalliques, on distingue usuellement les renforts métalliques élastiques, tels que ceux utilisés dans les couches de protection ou de frettage, et les renforts métalliques non extensibles ou inextensibles, tels que ceux utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa.

Un renfort métallique non extensible est caractérisé par un allongement total At, sous une force de traction égale 10% de la force à rupture Fm, au plus égal à 0.2%. Par ailleurs, un renfort métallique non extensible a un module élastique en extension compris usuellement entre 150 GPa et 200 GPa.

Un pneumatique de véhicule industriel lourd, notamment de génie civil, est soumis à de nombreuses agressions. En effet, le roulage de ce type de pneumatique se fait habituellement sur un sol avec des obstacles conduisant parfois à des perforations de la bande de roulement et du sommet. Ces perforations permettent l'entrée d'agents corrosifs, par exemple l'air et l'eau, qui oxydent les éléments de renfort métalliques de l'armature de sommet, notamment des couches de sommet, et réduisent considérablement la durée de vie du pneumatique.

La rigidité d'indentation est une grandeur physique qui traduit la résistance du sommet à la perforation lors du roulage sur un indenteur, comme un rocher par exemple, avec une taille de plusieurs dizaines de centimètres. Plus la rigidité d'indentation est faible et plus le sommet est performant pour absorber les obstacles.

Pour mesurer la rigidité d'indentation d'un pneumatique, on réalise un test de roulage sur des obstacles normalisés. Ces obstacles sont des polars à tête hémisphérique de diamètres et de hauteurs variables. Typiquement, le diamètre du polar varie de 0.5 pouces à 3 pouces, pour une hauteur comprise 25 mm à 400 mm. Le pneumatique est gonflé, monté sur la jante d'un véhicule de type Dumper. On réalise plusieurs passages successifs sur le polar en augmentant progressivement leur hauteur. Le test s'achève quand en roulant sur un polar suffisamment haut on finit par perforer le sommet du pneumatique testé. Pendant le test, un dispositif permet de mesurer les efforts maximaux générés au centre de la roue. A l'issue du test, les efforts du centre roue sont représentés en fonction de la hauteur des polars. La rigidité d'indentation correspond à la variation de l'effort vertical au centre roue par rapport à la variation de hauteur des polars.

Les pneumatiques de génie civil sont aussi caractérisés par leur rigidité radiale qui correspond au rapport entre la variation de l'effort vertical de chargement et la hauteur de flèche déformée sur un sol plan.

L'exigence de productivité croissante des exploitations minières où ces pneumatiques sont utilisés conduit à des besoins d'augmentation de la charge portée. Typiquement sur une dimension telle que 24.00R35, la charge normalisée nominale par exemple au sens de la norme ETRTO est de l'ordre de 20 tonnes, mais certaines utilisations peuvent nécessiter une augmentation supérieure de 15% de cette charge.

Une solution classique à un tel besoin consiste à augmenter la pression de gonflage du pneumatique à iso flèche d'écrasement. Cette augmentation de la pression entraîne ainsi une augmentation de la rigidité radiale du pneumatique qui permet de porter la charge nominale majorée, mais en même temps une augmentation de la rigidité d'indentation, ce qui fragilise davantage le pneumatique lors du roulage sur des obstacles.

Les inventeurs se sont donnés pour objectif de proposer une architecture de pneumatique lui permettant de porter une surcharge d'au moins 15% par rapport à sa charge nominale, tout en conservant une résistance suffisante vis-à-vis des agressions lors du roulage sur des obstacles.

Cet objectif a été atteint, selon l'invention, par un pneumatique pour véhicule lourd de type génie civil comprenant :

- radialement de l'extérieur vers l'intérieur, une bande de roulement, une armature de sommet et une armature de carcasse,

- ladite armature de sommet comprenant au moins une couche de sommet formée de renforts métalliques élastiques enrobés dans un mélange élastomérique, faisant avec une direction circonférentielle (XX'), un angle A ;

- ladite armature de carcasse étant constituée par au moins deux couches de carcasse comprenant des renforts métalliques enrobés dans un mélange élastomérique, lesdites couches de carcasse ayant des rigidités par unité de largeur R1, R2, pour respectivement la première et la deuxième couche, mesurées dans le plan équatorial (XY) ;

- les renforts métalliques d'une première couche de carcasse formant, avec la direction circonférentielle (XX'), un angle A1, et les renforts métalliques d'une deuxième couche de carcasse formant, avec la direction circonférentielle (XX'), un angle A2, de telle sorte que les angles A1 et A2, et les rigidités R1 et R2, mesurés dans le plan équatorial (XZ), vérifient simultanément les trois relations suivantes:

a) $R1 * \sin^2(2 * A1) + R2 * \sin^2(2 * A2) \geq (R1 + R2) * \sin^2(30°)$

b) $\|A1|-|A2\|<10°$,

c) $0.7 \leq R1/R2 \leq 1.3$ ;

- les renforts métalliques de chaque couche de carcasse ont une déformation critique de flambement en compression DF au moins égale à 2.5%, et un module élastique en compression MC au moins égal à 10 GPa.

L'idée principale de l'invention est de parvenir à un compromis entre la rigidité radiale, utile pour porter la charge et la rigidité d'indentation qui doit être suffisamment faible pour que le pneumatique absorbe les obstacles sans perforation du sommet.

La solution de l'invention propose une armature de carcasse d'au moins deux couches composites dotées de renforts suffisamment élastiques pour éviter leur flambement lors de la mise en compression.

Un pneumatique du génie civil en roulage génère des contraintes de flambement dans les câbles de son armature de carcasse, qui sont fortement fléchis, de telle manière qu'ils tendent à flamber ce qui entraîne une augmentation de la courbure des fils unitaires provoquant la rupture des fils. Ces câbles peuvent alors se rompre prématurément, déterminant ainsi la limite d'endurance en roulage du pneumatique.

D'une manière générale, les éléments de renforcement qui sont utilisés dans les couches composites des armatures de carcasse de pneumatiques du génie civil sont constitués de câbles métalliques, comportant par exemple plusieurs couches de fils ou plusieurs torons qui sont enroulés ensemble en hélice selon des pas variables. Les fils présentent usuellement un diamètre compris entre 0,15 mm et 0,5 mm, et ils sont par exemple constitués d'acier dont le taux de carbone est compris entre 0,15 % et 1,2 %. Ces fils sont obtenus par écrouissage, ayant été préalablement revêtus d'une fine couche d'un métal (tel que du laiton, du zinc ou du bronze) pour favoriser ledit écrouissage et/ou l'adhésion avec la composition de caoutchouc utilisée dans ladite couche composite.

Afin de retarder le flambement des câbles d'armature de carcasse, les solutions connues de l'état de l'art consiste à adjoindre à chaque câble un fil de frette de diamètre réduit (usuellement compris entre 0,10 mm et 0,25 mm) et enroulé en hélice sur la surface externe du câble. En général, ce fil de frette est enroulé selon un pas très réduit (par exemple allant de 3 mm à 5,5 mm) et dans un sens opposé ou identique à celui de l'enroulement des fils de ladite couche externe. Mais ces solutions ont l'inconvénient d'aboutir à des câbles avec une déformation critique de flambement en compression faible. Les inventeurs se sont donc focalisés sur la possibilité de repousser cette déformation critique de flambement par l'utilisation de câbles plus appropriés.

Les inventeurs ont pallié ces difficultés en proposant des couches de carcasse qui ont des renforts sous la forme de câbles métalliques, élastiques, multi-torons formés d'une couche interne de torons enroulés en hélice, et d'une couche externe enroulés en hélice autour de la couche interne.

L'allongement structural des câbles élastiques multi-torons est bien connu de l'homme de l'art. Cette propriété confère au câble élastique la possibilité de se déformer fortement sous une faible charge. C'est la courbure des fils ou des torons de ces câbles et le jeu radial laissé aux fils et/ou aux torons qui sont à l'origine de cet allongement structural. L'allongement structural permet ainsi à ces derniers de se déformer plus fortement que les câbles compacts sous sollicitation à faible charge et ce, de manière élastique. Cette rigidité faible du câble est utile lors de sollicitation de compression axiale puisqu'elle va lui permettre de se déformer également de façon plus importante qu'un câble compact, sans flamber.

L'invention propose également une architecture simplifiée par la suppression des couches sommet de travail, contrairement à la pratique de l'état de l'art, dont la fonction est reprise par les deux couches de carcasse, formées de renforts élastiques croisés au sommet. Cette architecture simplifiée permet de réduire la rigidité d'indentation.

L'architecture pneumatique proposée par l'invention se singularise par les fonctions cumulées de l'armature de carcasse de contribuer à la rigidité radiale pour porter la charge tout en participant à la fonction de guidage des pneumatiques pour le fonctionnement en dérive.

Radialement extérieure à l'armature de carcasse, l'armature de sommet d'un pneumatique conforme à l'invention comprend une couche de sommet qui tantôt peut répondre à un besoin de protection de l'armature de carcasse, ou tantôt un besoin de frettage. D'autres variantes de l'invention peuvent inclure à la fois une armature de frettage et une armature de protection.

Quand l'armature de sommet répond à un besoin de frettage, les renforts de la couche sont enrobés dans un mélange élastomérique, et font avec une direction circonférentielle (XX') tangente à la circonférence du pneumatique, un angle compris entre -2.5° et 2.5°. Le frettage apporte de la rigidité circonférentielle qui intervient notamment dans la mise à plat du pneumatique gonflé, monté sur sa jante, et écrasé par la charge portée.

Selon l'invention, les renforts métalliques d'une première couche de carcasse forment, avec la direction circonférentielle (XX'), un angle A1, et les renforts métalliques d'une deuxième couche de carcasse forment, avec la direction circonférentielle (XX'), un angle A2, de telle sorte que les angles A1 et A2, et les rigidités R1 et R2, mesurés dans le plan équatorial (XZ), vérifient simultanément les trois relations suivantes :

a) $R1 * \sin^2(2 * A1) + R2 * \sin^2(2 * A2) \geq (R1 + R2) * \sin^2(30°)$

b) $\|A1|-|A2\|<10°$,

c) $0.7 \leq R1/R2 \leq 1.3$.

La première relation, $R1 * \sin^2(2 * A1) + R2 * \sin^2(2 * A2) \geq (R1 + R2) * \sin^2(30°)$, résulte de l'expression des rigidités de cisaillement dans le plan (XY), en fonction des angles A1, et A2 des renforts. La deuxième relation en valeur absolue,

||A|-|A2||<10°, permet de déduire l'angle A2, quand on connaît l'angle A1. La troisième relation, 0.7 ≤R1/R2≤1.3, traduit que l'écart des rigidités par unité de largeur des couches de carcasse mesurées dans le plan équatorial (XY) sont proches c'est-à-dire compris dans un intervalle de 30%. Cet écart de rigidités par unité de largeur des couches de carcasse permet une répartition plus homogène des reprises des tensions, et également de limiter les niveaux maxima de compression dans les deux couches.

L'écart de rigidités entre les deux couches de carcasse, est soit dû à l'utilisation de renforts différents, soit dû à l'utilisation des mêmes renforts avec des pas différents.

En plus de l'orientation des renforts avec la direction circonférentielle, les propriétés mécaniques des renforts notamment en sollicitations de compression conditionnent le bon fonctionnement de l'invention.

Toujours selon l'invention, les renforts métalliques de chaque couche de carcasse ont une déformation critique de flambement en compression DF au moins égale à 2.5%, et un module élastique en compression MC au moins égal à 10 GPa.

Lors de la fabrication du pneumatique, les deux couches de carcasse, ainsi que les autres mélanges constituant l'armature de carcasse sont posées sur un cylindre à plat. A la fin de la confection de l'armature de carcasse, on procède à la conformation du pneumatique en gonflant le cylindre de confection pour arriver à la forme torique bien connue des pneumatiques. Il est connu que les angles des deux couches de carcasse varient en décroissant depuis la position au niveau de la tringle jusqu'au sommet. Les deux angles différents des couches de carcasse forment une triangulation sous le sommet qui confère au pneumatique de la rigidité.

Lors du roulage du pneumatique, à l'entrée, et à la sortie de l'aire de contact, les câbles de couches de carcasse sont sollicités en compression.

La solution de l'invention fonctionne si les couches de carcasse peuvent supporter les sollicitations en compression sans flambement. Pour cela, les inventeurs ont observé que l'utilisation de renforts sous la forme de câbles élastiques à fort allongement structural améliore le comportement en compression en repoussant la déformation critique de flambement à 2. 5%. Pour les renforts classiques à base de câbles compacts, la déformation critique de flambement est plutôt inférieure à 1%, et sont insuffisantes. Les modules élastiques en compression de ces câbles doivent être supérieurs à 10 GPa.

Dans un mode de réalisation préférée de l'invention, les angles A1 et A2 ont des orientations opposées, par rapport à la direction circonférentielle (XX').

Dans un mode de réalisation simplifiée de l'invention, les deux couches de l'armature de carcasse sont croisées avec des renforts qui font avec la direction circonférentielle (XX') des angles A1 et A2 égaux en valeur absolue et opposés en orientation.

L'utilisation des angles opposés dans les deux couches de carcasse conduit à une triangulation sous le sommet sous une forme géométrique proche de losanges résultant du croisement des renforts à orientations opposées. Cette triangulation sous une forme approximative de losanges confère un niveau de rigidité maximal à l'armature de carcasse.

Avantageusement, les angles A1 et A2 ont des valeurs absolues qui sont comprises dans l'intervalle [15° ; 75°].

D'après les inventeurs les rigidités de cisaillement dans le plan (XY) qui confèrent au pneumatique son aptitude à guider le véhicule lors des virages, atteint une valeur suffisante quand les angles A1 et A2 sont en valeur absolue tous les deux compris dans l'intervalle [15° ; 75°].

Toujours selon l'invention les rigidités par unité de largeur de couche de carcasse R1, R2, respectivement de la première, et de la deuxième couche de carcasse sont identiques.

Dans ce mode de réalisation, les deux couches de carcasse sont constituées des mêmes renforts avec des pas identiques, pour un objectif de standardisation lors de la fabrication du pneumatique.

Dans un mode préféré de réalisation de l'invention, les renforts métalliques de chaque couche de carcasse sont des câbles multi-torons, ayant une structure 1xN comprenant une unique couche de N torons enroulés en hélice, chaque toron comprenant une couche interne de M fils internes enroulés en hélice et une couche externe de P fils externes enroulés en hélice autour de la couche interne.

Il est avantageux d'avoir des câbles pour lesquels N=3, ou 4 torons.

Il est également avantageux d'avoir un nombre de fils internes pour chaque toron, M=1,3, ou 4, et P=5, 6, 8 ou 9.

Les câbles élastiques à torons sont connus de l'homme de l'art, ils se caractérisent par l'association de torons en torsade. Chaque toron est l'association de fils métalliques d'acier en torsade. Les torons peuvent être aussi des câbles compacts. Les torons peuvent ne pas être à couche de fils saturée. Cela permet au câble d'avoir plus de jeu ou d'aération structurale. Mais aussi cela lui confère une plus grande aptitude à être pénétré par la gomme. Ces câbles élastiques possèdent grâce à la courbure de leurs fils ou torons une compressibilité axiale bien supérieure à celle des câbles compacts de rigidité de compression équivalente.

A titre d'exemple, on peut citer le câble 4x(1+5)x.026. Autrement dit, ce câble est composé de 4 torons de deux couches chacun. La couche interne comprend un seul fil, et la couche externe 5 fils. Chaque fil a un diamètre de 26 centièmes de millimètre. Si bien que suivant le formalisme cité plus haut, on a : N=4, M=1 et P=5.

En plus des propriétés mécaniques des câbles, les positions relatives des deux couches de carcasse ont un impact sur la performance en endurance du pneumatique. Les inventeurs ont établi qu'en fonction de la dimension étudiée, et des conditions d'utilisation en charges et pression, différentes configurations sont possibles pour les couches de l'armature de carcasse en fonction de l'effet mécanique recherché.

Selon un autre mode de réalisation préféré de l'invention, une première couche de carcasse intérieure comprend une partie principale, s'enroulant dans chaque bourrelet, de l'intérieur vers l'extérieur du pneumatique, autour d'un noyau tringle pour former un retournement, et une deuxième couche de carcasse extérieure comprend une partie principale, s'enroulant au moins en partie dans chaque bourrelet, de l'extérieur vers l'intérieur du pneumatique, autour d'un noyau tringle.

Une couche de carcasse intérieure est dite "retournée", lorsqu'elle comprend une partie principale, reliant les deux bourrelets entre eux et s'enroulant, dans chaque bourrelet, de l'intérieur vers l'extérieur du pneumatique autour du noyau tringle pour former un retournement ayant une extrémité libre. Ainsi la première couche de carcasse est retournée, et la seconde couche non retournée.

Dans le cas d'une couche de carcasse non retournée, chacune des deux portions d'extrémités de ladite couche de carcasse non retournée peut être couplée soit avec le retournement, soit avec la partie principale d'une couche de carcasse retournée. Par couplage, on entend une zone de recouvrement entre la couche de carcasse non retournée et une couche de carcasse retournée, permettant une reprise des efforts de tension par cisaillement.

Dans ce mode de réalisation, l'armature de carcasse comprend trois portions : une première portion axialement la plus extérieure, avec la superposition de trois couches à savoir, la partie principale de la couche de carcasse la plus axialement intérieure, son retournement autour de la tringle, et la deuxième couche de carcasse non retournée. Une deuxième portion qui relie les deux extrémités des retournements de la couche de carcasse axialement la plus intérieure, et qui comprend les deux couches de carcasse. Enfin, l'armature de carcasse comprend une troisième zone symétrique de la première par rapport à l'axe radial dans le plan méridien.

Les éléments de renforcement de la partie principale d'une couche de carcasse retournée ou non retournée sont sensiblement parallèles. Les éléments de renforcement d'un retournement d'une couche de carcasse sont aussi sensiblement parallèles, et forment par rapport à la direction circonférentielle un angle opposé de celui de la partie principale. Cette orientation des renforts pour les parties principale et retournée ont pour effet de limiter les cisaillements entre couches de carcasse.

Dans un autre mode de réalisation de l'invention, chaque couche de carcasse comprend une partie principale, s'enroulant dans chaque bourrelet, de l'intérieur vers l'extérieur du pneumatique, autour d'un noyau tringle pour former un retournement.

Dans ce mode de réalisation, les deux couches de carcasse sont retournées. Les extrémités libres des retournements des deux couches de carcasse doivent être suffisamment éloignées l'une de l'autre pour éviter leur coïncidence. Une distance minimale de 15 mm à 20 mm est recommandée à cet effet.

Il est avantageux que l'armature de sommet comprenne au moins une couche comportant des renforts métalliques enrobés dans un mélange élastomérique et formant, avec la direction circonférentielle (XX') un angle au plus égal à 2.5° en valeur absolue.

Dans une telle configuration, l'armature de sommet répond à un besoin de frettage, qui apporte de la rigidité circonférentielle qui intervient notamment dans la mise à plat du pneumatique gonflé, monté sur sa jante, et écrasé par la charge portée.

Le pneumatique de l'invention comprend une armature de sommet d'au moins une couche radialement extérieure à une armature de carcasse. Dans la configuration la plus simple de l'invention, le pneumatique comprend l'armature de carcasse et un sommet limité à une seule couche.

Les caractéristiques de l'invention seront mieux comprises à l'aide de la description des figures annexées 1, 2 3, et 4. Les figures 1, 2 et 3 sont décrites avec une armature de sommet comprenant au moins deux couches sommet :

- la figure 1 représente une vue éclatée en coupe dans un plan méridien d'un pneumatique pour véhicule lourd de type génie civil selon l'invention, avec une seule couche de carcasse retournée autour de la tringle. La deuxième couche de carcasse n'est pas retournée ;

- la figure 2 représente une vue éclatée en coupe dans un plan méridien d'un pneumatique pour véhicule lourd de type génie civil selon l'invention, avec les deux couches de carcasse retournées autour de la tringle ;

- la figure 3 représente une vue en perspective de l'écorché de la figure 2 d'un pneumatique pour véhicule lourd de type génie civil selon l'invention ;

- la figure 4 représente un renfort des couches de carcasse sous la forme d'un câble comprenant quatre torons.

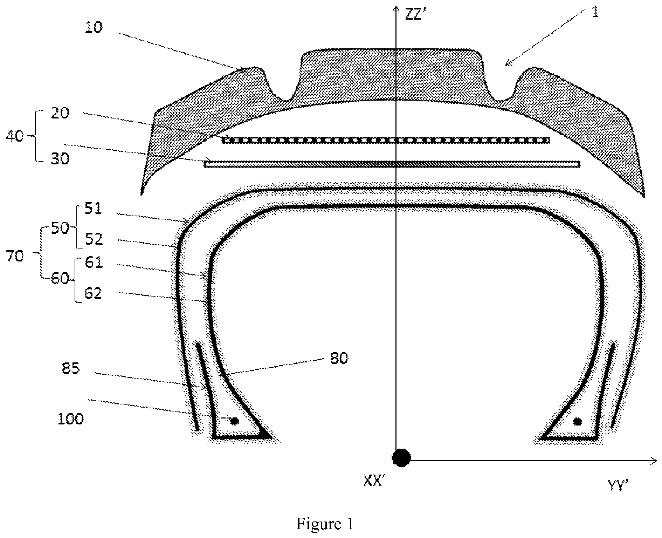

[Fig.1] Sur la figure 1, on peut voir dans un plan méridien d'un pneumatique 1 de l'invention :

- Une bande de roulement 10 destinée à être en contact avec le sol, radialement extérieure à une armature de sommet 40 formée de deux couches composites 20 et 30 comprenant des renforts métalliques enrobés dans un mélange élastomérique. L'armature de sommet est elle-même radialement extérieure à une armature de carcasse 70.

- L'armature de carcasse 70 comprend une première couche de carcasse 60 radialement la plus intérieure sous le sommet, ayant une partie principale 80, s'enroulant dans chaque bourrelet, de l'intérieur vers l'extérieur du pneumatique, autour d'un noyau tringle 100 pour former un retournement 85. L'armature de carcasse est complétée par une deuxième couche de carcasse 50, radialement extérieure à la première couche de carcasse 60 et en contact avec elle. Elle comprend une partie principale, s'enroulant au moins en partie dans chaque bourrelet, de l'extérieur vers l'intérieur du pneumatique, autour du noyau tringle 100. Les deux couches de carcasse (50, 60) sont composés de renforts (52 ,62) enrobés dans un mélange élastomérique (51,61). La première couche de carcasse 60 est dite retournée autour de la tringle 100.

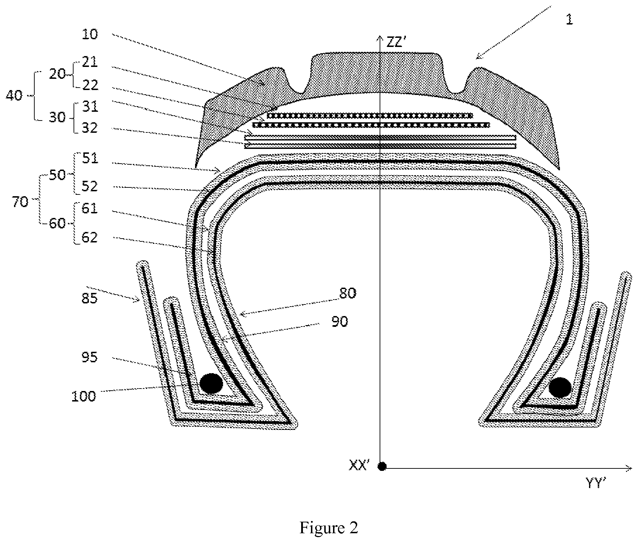

[Fig.2] Sur la figure 2, on peut voir un autre pneumatique 1 conforme à l'invention :

- Une bande de roulement 10 destinée à être en contact avec le sol, radialement extérieure à une armature de sommet 40 formée de quatre couches de sommet comprenant des renforts métalliques enrobés dans un mélange élastomérique. Ces couches de sommet sont regroupées en une armature de frettage 30 avec les couches de frettage (31,32), et en une armature de protection 20 avec les couches de protection (21, 22). L'armature de sommet est elle-même radialement extérieure à une armature de carcasse 70 ;

- L'armature de carcasse 70 comprend deux couches de carcasse 50 et 60, la couche de carcasse 60 étant radialement la plus intérieure. Chaque couche de carcasse (50, 60) ayant respectivement une partie principale (90,80), s'enroulant dans chaque bourrelet, de l'intérieur vers l'extérieur du pneumatique, autour d'un noyau tringle 100 pour former un retournement (95,85). Les deux couches de carcasse (50, 60) comprennent des renforts métalliques (52 ,62) enrobés dans un mélange élastomérique (51,61).

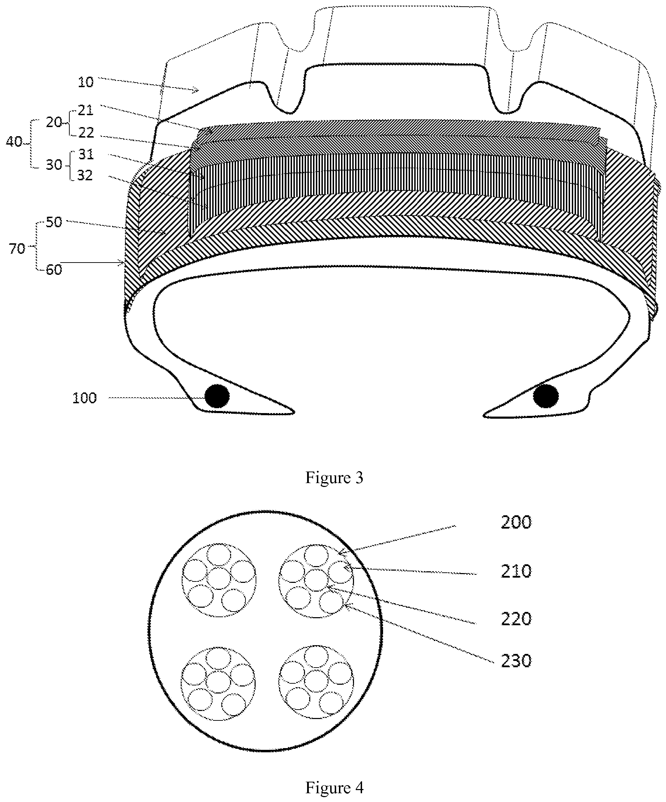

[Fig.3] La figure 3 représente une vue en perspective du pneumatique de la figure 2 de l'invention où sont représentés l'empilement des couches des armatures de carcasse 70, de frettage 30 et de protection 20, coiffés de la bande de roulement 10.

[Fig.4] La figure 4 représente un exemple de câbles formés de quatre torons 200. Chaque toron 200, comprend une couche interne 220 de M fils, et une couche externe 230, de P fils. Ainsi sur la figure 4, le nombre N de torons est égal à 4, le nombre M de fils de la couche intérieure est égal à 1, et enfin le nombre de fils de la couche externe est égal à 5. Ce câble est désigné : 4x(1+5)x0.26, où 0.26 représente le diamètre de chaque fil en millimètre.

Le pneumatique de dimension 24.00R35 a été conçu conformément à l'invention, telle que représentée sur la figure 1. Ces résultats ont été comparés à ceux d'un pneumatique de référence, tel que défini ci-dessous.

Le pneumatique de référence comprend radialement de l'intérieur vers l'extérieur:

- Une armature de carcasse avec une seule couche de carcasse formée de 49 fils de 23 centièmes de millimètre de diamètre chacun. L'angle des renforts avec la direction circonférentielle est de 90°. C'est une armature de carcasse radiale retournée autour de la tringle ;

- Une armature de frettage avec deux couches de frettages superposées comprenant chacune des renforts constitués d'un assemblage de 26 fils de 30 centièmes de millimètre de diamètre chacun. Les couches de frettage sont croisées avec des angles ±8°;

- Une armature de travail avec deux couches croisées avec des angles 19°/-33°, formées de renforts constitués d'un assemblage de 26 fils de 30 centièmes de millimètre de diamètre chacun ;

Une armature de protection avec deux couches croisées avec des angles ±24°, formées de renforts constitués d'un assemblage de 24 fils de 26 centièmes de millimètre de diamètre chacun.

A titre d'exemple, deux couches croisées 19°/-33° signifie que par rapport à la direction radiale de l'extérieur vers l'intérieur du pneumatique, les renforts de la première couche rencontrée ont des angles de 19° avec la direction circonférentielle XX', et de -33° pour les renforts de la deuxième couche.

L'armature de carcasse du pneumatique de référence est constituée d'une seule couche de carcasse comprenant des renforts sous la forme de câbles compacts frettés au sens de la définition de la norme ISO 17893:2004. L'empilement des couches du pneumatique de référence comprend en plus de l'armature de carcasse, les couches de travail, les couches de frettage, et les couches de protection dont les caractéristiques sont définies dans le tableau qui suit. Les angles, et les pas ont été mesurés au sommet du pneumatique :

[Tableau 1]

| Architecture du pneumatique ▼ | Assemblage des renforts | Angle des renforts XX' au centre du sommet | Force rupture des renforts (N) | Pas des renforts dans la couche (mm) |
|---|---|---|---|---|
| 2 Couches de protection | 4×(1+5) ×0.26 | 24°/-24° | 26 50 | 2.5 |
| 2 Couches de travail | 3+ (9+14×0.30) FR | 19°/-33° | 6000 | 3.4 |
| 2 Couches de frettage | 3+ (9+14×0.30) FR | 8°/-8° | 6000 | 3.4 |
| Couche de carcasse | (1+6)×(1+6) ×0.23FR | 90° | 5400 | 6,2 |

Pour le pneumatique témoin, les renforts de la couche de carcasse ont un module de compression de 75 GPa, et une déformation critique de flambement de 0.4%.

La pression de gonflage est de 725 kPa, pour une charge à porter de 20000 Kg.

Le pneumatique de l'invention est de la même dimension que le pneumatique de référence, 24.00R35, comprend radialement de l'intérieur vers l'extérieur:

- Une armature de carcasse avec deux couches de carcasse comprenant chacune des renforts de 24 fils de 26 centièmes de millimètre de diamètre chacun. C'est un câble multi-torons, avec 4 torons assemblés selon deux couches : une couche interne de un fil et une couche externe de 5 fils. Les deux couches de carcasse ne sont pas radiales, c'est donc une armature de carcasse bias ;

- Deux couches avec des renforts avec des angles inférieurs à 2.5° en valeur absolue, pour assurer à la fois les fonctions de protection et de frettage.

Le tableau qui suit résume les choix de conception du pneumatique conforme à l'invention, et représentée sur la figure 1 :

[Tableau 2]

| | Assemblage des renforts | Angle des renforts au centre sommet (°) | Force rupture des renforts (N) | Pas des renforts dans la couche (mm) |
|---|---|---|---|---|
| 2 Couches de protection/ frettage | 4×(4+9)×0.26 | 0° | 6000 | 3.7 |
| 2 Couches de carcasse | 4×(1+5)×0.26 | 65°/-65° | 2650 | 5.5 |

Pour le pneumatique de l'invention, les renforts de la couche de carcasse ont un module de compression de 45 GPa, et une déformation critique de flambement de 4%.

L'architecture du pneumatique de l'invention est simplifiée par rapport à la référence dans le sens où les couches de travail ont été supprimées et les couches de carcasse cumulent à la fois les fonctions de port de la charge, et de guidage du véhicule lors des virages.

Dans cet exemple, l'armature de protection comprend une seule couche, de même que l'armature de frettage ne comporte qu'une seule couche de frettage. Les couches de protection et de frettage ont le même mélange d'enrobage, et les angles que font les renforts avec la direction circonférentielle XX' sont égaux à 0° pour les deux couches.

L'armature de carcasse comprend deux couches dont celle qui est la plus radialement intérieure est retournée autour de la tringle. Les renforts de chaque couche de carcasse font avec la direction circonférentielle (XX') un angle en valeur absolue de 65°, mesuré au sommet du pneumatique.

Des simulations de calculs par éléments finis ont été réalisées respectivement sur les pneumatiques de référence, et de l'invention. Les grandeurs observées sont :

**[0082]** - La rigidité radiale du pneumatique de l'invention capable de porter 15% de charge en plus que le pneu de référence ;

- Les rigidités d'indentation ;

- Les poussées de dérive en lien avec le guidage du véhicule.

Ces résultats sont rassemblés dans le tableau suivant :

[Tableau 3]

|  | Rigidités radiales (N/m) | Rigidité d'indentation (N/m) | Rigidité de dérive N/° |
|---|---|---|---|
| Pneumatique de référence | 1.9E+06 | 1.6E+06 | 2E+04 |
| Pneumatique invention | 2.3E+06 | 1.2E+06 | 2E+04 |

**On** observe un gain en rigidité radiale de 20% sur le pneumatique de l'invention qui confirme sa capacité à porter 15% de charge en plus.

La baisse de 25% de la rigidité d'indentation confirme la capacité améliorée du pneumatique de l'invention à rouler sur des indenteurs.

Les rigidités de dérive sont identiques entre le témoin et le pneumatique de l'invention. La capacité du pneumatique de l'invention à guider le véhiculé n'est pas dégradée.

Les résultats confirment l'atteinte du compromis recherché par les inventeurs d'améliorer la capacité de charge du pneumatique sans dégrader sa capacité à rouler sur des obstacles.

**Revendications**

1. Pneumatique (1) pour véhicule lourd de type génie civil comprenant :

   - radialement de l'extérieur vers l'intérieur, une bande de roulement (10), une armature de sommet (40) et une armature de carcasse (70),
   - ladite armature de sommet (40) comprenant au moins une couche de sommet formée de renforts métalliques élastiques enrobés dans un mélange élastomérique, faisant avec une direction circonférentielle (XX'), un angle A ;
   - ladite armature de carcasse (70) étant constituée par au moins deux couches de carcasse (50, 60) comprenant des renforts métalliques (52, 62) enrobés dans un mélange élastomérique (51, 61), lesdites couches de carcasse ayant des rigidités par unité de largeur R1, R2, pour respectivement la première et la deuxième couche, mesurées dans le plan équatorial (XY),

   les renforts métalliques (52) d'une première couche de carcasse (50) formant, avec la direction circonférentielle (XX'), un angle A1, et les renforts métalliques (62) d'une deuxième couche de carcasse (60) formant, avec la direction circonférentielle (XX'), un angle A2, de telle sorte que les angles A1 et A2, et les rigidités R1 et R2, mesurés dans le plan équatorial (XZ), vérifient simultanément les trois relations suivantes :

   a)

   $$R1 * \sin^2(2 * A1) + R2 * \sin^2(2 * A2) \geq (R1 + R2) * \sin^2(30°)$$

   b)

   $$||A1|-|A2||<10°,$$

c)

$$0.7 \leq R1/R2 \leq 1.3,$$

**caractérisé en ce que** les renforts métalliques (52, 62) de chaque couche de carcasse (50, 60) ont une déformation critique de flambement en compression DF au moins égale à 2.5%, et un module élastique en compression MC au moins égal à 10 GPa.

2. **Pneumatique (1)** pour véhicule lourd de type génie civil selon la revendication 1, dans lequel les angles A1 et A2 ont des orientations opposées, par rapport à la direction circonférentielle (XX').

3. **Pneumatique (1)** pour véhicule lourd de type génie civil selon l'une des revendications 1 à 2, dans lequel les angles A1 et A2 ont des angles en valeur absolue par rapport à la direction circonférentielle (XX') qui sont compris dans l'intervalle [15° ; 75°].

4. **Pneumatique (1)** pour véhicule lourd de type génie civil selon l'une quelconque des revendications de 1 à 3, dans lequel les rigidités par unité de largeur de couche R1, R2 respectivement de la première couche et de la deuxième couche de carcasse sont identiques.

5. **Pneumatique (1)** pour véhicule lourd de type génie civil selon l'une quelconque des revendications 1 à 4, dans lequel les renforts métalliques (52, 62) de chaque couche de carcasse (50, 60) sont des câbles multi-torons, ayant une structure 1xN comprenant une unique couche de N torons enroulés en hélice, chaque toron comprenant une couche interne de M fils internes enroulés en hélice et une couche externe de P fils externes enroulés en hélice autour de la couche interne.

6. **Pneumatique (1)** pour véhicule lourd de type génie civil selon la revendication 5, dans lequel N=3 ou N=4.

7. **Pneumatique (1)** pour véhicule lourd de type génie civil selon l'une des revendications 5 ou 6, dans lequel M=1,3, ou 4.

8. **Pneumatique (1)** pour véhicule lourd de type génie civil selon l'une quelconque des revendications 5 à 7, dans lequel dans lequel P=5, 6 ,8 ou 9.

9. **Pneumatique (1)** pour véhicule lourd de type génie civil selon l'une des revendications de 1 à 8, dans lequel une première couche de carcasse intérieure (60) comprend une partie principale (80), s'enroulant dans chaque bourrelet, de l'intérieur vers l'extérieur du pneumatique, autour d'un noyau tringle (100) pour former un retournement (85), et une deuxième couche de carcasse extérieure (50) comprend une partie principale, s'enroulant au moins en partie dans chaque bourrelet, de l'extérieur vers l'intérieur du pneumatique, autour d'un noyau tringle (100).

10. **Pneumatique (1)** pour véhicule lourd de type génie civil selon l'une quelconque des revendications de 1 à 9, dans lequel chaque couche de carcasse (50, 60) comprend une partie principale (90, 80), s'enroulant dans chaque bourrelet, de l'intérieur vers l'extérieur du pneumatique, autour d'un noyau tringle (100) pour former un retournement (95, 85).

11. **Pneumatique (1)** selon l'une quelconque des revendications de 1 à 10 dans lequel l'armature de sommet (30) est constituée par au moins une couche comprenant des renforts métalliques enrobés dans un mélange élastomérique et formant, avec la direction circonférentielle (XX') un angle A au plus égal à 2.5° en valeur absolue.

**Patentansprüche**

1. Reifen (1) für ein Schwerlastbaufahrzeug, umfassend:

   - radial von außen nach innen einen Laufstreifen (10), eine Gürtelverstärkung (40) und eine Karkassenverstärkung (70),
   - wobei die Gürtelverstärkung (40) mindestens eine Gürtellage umfasst, die aus elastischen metallischen Festigkeitsträgern gebildet wird, die in eine Elastomermischung eingebettet sind und mit der Umfangsrichtung (XX') einen Winkel A bilden;
- wobei die Karkassenverstärkung (70) aus mindestens zwei Karkassenlagen (50, 60) besteht, die metallische Festigkeitsträger (52, 62) umfassen, die in eine Elastomermischung (51, 61) eingebettet sind, wobei die Karkassenlagen Steifigkeiten je Breiteneinheit R1, R2 für jeweils die erste und die zweite Lage, gemessen in der Äquatorialebene (XY), aufweisen,

wobei die metallischen Festigkeitsträger (52) einer ersten Karkassenlage (50) mit der Umfangsrichtung (XX') einen Winkel A1 bilden und die metallischen Festigkeitsträger (62) einer zweiten Karkassenlage (60) mit der Umfangsrichtung (XX') einen Winkel A2 bilden, so dass die Winkel A1 und A2 und die Steifigkeiten R1 und R2, gemessen in der Äquatorialebene (XZ), die drei folgenden Gleichungen gleichzeitig erfüllen:

a)

$$R1 * sin^2(2 * A1) + R2 * sin^2(2 * A2) \geq (R1 + R2) * sin^2(30°)$$

b)

$$||A1| - |A2|| < 10°,$$

c)

$$0.7 \leq R1/R2 \leq 1.3,$$

**dadurch gekennzeichnet, dass** die metallischen Festigkeitsträger (52, 62) jeder Karkassenlage (50, 60) eine kritische Knickverformung bei Druckbelastung DF von mindestens 2,5 % und einen Elastizitätsmodul bei Druckbelastung MC von mindestens 10 GP aufweisen.

2.  Reifen (1) für ein Schwerlastbaufahrzeug nach Anspruch 1, bei dem die Winkel A1 und A1 entgegengesetzte Ausrichtungen in Bezug auf die Umfangsrichtung (XX') aufweisen.

3.  Reifen (1) für ein Schwerlastbaufahrzeug nach einem der Ansprüche 1 bis 2, bei dem die Winkel A1 und A2 Absolutwertwinkel in Bezug auf die Umfangsrichtung (XX') aufweisen, die in dem Intervall [15°; 75°] liegen.

4.  Reifen (1) für ein Schwerlastbaufahrzeug nach einem der Ansprüche 1 bis 3, bei dem die Steifigkeiten je Lagenbreiteneinheit R1, R2 der ersten Lage beziehungsweise der zweiten Karkassenlage identisch sind.

5.  Reifen (1) für ein Schwerlastbaufahrzeug nach einem der Ansprüche 1 bis 4, bei dem die metallischen Festigkeitsträger (52, 62) jeder Karkassenlage (50, 60) mehrlitzige Seile mit dem Aufbau IxN sind, umfassend eine einzige Lage aus N Litzen, die schraubenlinienförmig gewunden sind, wobei jede Litze eine innere Lage aus M inneren Drähten umfasst, die schraubenlinienförmig gewunden sind, und eine äußere Lage aus P äußeren Drähten, die schraubenlinienförmig um die innere Lage gewunden sind.

6.  Reifen (1) für ein Schwerlastbaufahrzeug nach Anspruch 5, bei dem N=3 oder N=4 ist.

7.  Reifen (1) für ein Schwerlastbaufahrzeug nach einem der Ansprüche 5 oder 6, bei dem M=1, 3 oder 4 ist.

8.  Reifen (1) für ein Schwerlastbaufahrzeug nach einem der Ansprüche 5 bis 7, bei dem P=5, 6, 8 oder 9 ist.

9.  Reifen (1) für ein Schwerlastbaufahrzeug nach einem der Ansprüche 1 bis 8, bei dem eine erste innere Karkassenlage (60) einen Hauptteil (80) umfasst, der in jedem Wulst von der Innenseite zur Außenseite des Reifens hin um einen Wulstkern (100) umgeschlagen ist, um eine Umlage (85) zu bilden, und eine zweite äußere Karkassenlage (50) einen Hauptteil umfasst, der mindestens teilweise in jedem Wulst von der Außenseite zur Innenseite des Reifens hin um einen Wulstkern (100) umgeschlagen ist.

10. Reifen (1) für ein Schwerlastbaufahrzeug nach einem der Ansprüche 1 bis 9, bei dem jede Karkassenlage (50, 60) einen Hauptteil (90, 80) umfasst, der in jedem Wulst von der Innenseite zur Außenseite des Reifens hin um einen Wulstkern (100) umgeschlagen ist, um eine Umlage (95, 85) zu bilden.

11. Reifen (1) nach einem der Ansprüche 1 bis 10, bei dem die Gürtelverstärkung (30) aus mindestens einer Lage besteht, die metallische Festigkeitsträger umfasst, die in eine Elastomermischung eingebettet sind und mit der Umfangsrichtung (XX') einen Winkel A von höchstens 2,5° als Absolutwert bilden.

**Claims**

1. **Tyre (1)** for a heavy-duty vehicle of construction plant type, comprising:

   radially from the outside to the inside, a tread (10), a crown reinforcement (40) and a carcass reinforcement (70), said crown reinforcement (40) comprising at least one crown layer formed of elastic metal reinforcers coated in an elastomer compound making, with a circumferential direction (XX'), an angle A;
   said carcass reinforcement (70) being made up of at least two carcass layers (50, 60) comprising metal reinforcers (52, 62) coated in an elastomer compound (51, 61), said carcass layers having stiffnesses per unit width R1, R2, for the first and second layers, respectively, measured in the equatorial plane (XY),
   the metal reinforcers (52) of a first carcass layer (50) form, with the circumferential direction (XX'), an angle A1, and the metal reinforcers (62) of a second carcass layer (60) form, with the circumferential direction (XX'), an angle A2, such that the angles A1 and A2, and the stiffnesses R1 and R2, measured in the equatorial plane (XZ), simultaneously satisfy the following three relationships:

   a)

   $$R1*\sin^2(2*A1)+R2*\sin^2(2*A2)\geq(R1+R2)*\sin^2(30°),$$

   b)

   $$||A1|-|A2||<10°,$$

   c)

   $$0.7\leq R1/R2\leq1.3,$$

   **characterized in that** the metal reinforcers (52, 62) of each carcass layer (50, 60) have a critical compression buckling deformation DF at least equal to 2.5% and a compression elastic modulus MC at least equal to 10 GPa.

2. **Tyre (1)** for a heavy-duty vehicle of construction plant type according to Claim 1, wherein the angles A1 and A2 have opposite orientations, with respect to the circumferential direction (XX').

3. **Tyre (1)** for a heavy-duty vehicle of construction plant type according to one of Claims 1 and 2, wherein the angles A1 and A2 are angles, in terms of absolute value, with respect to the circumferential direction (XX'), which are comprised in the interval [15°; 75°].

4. **Tyre (1)** for a heavy-duty vehicle of construction plant type according to any one of Claims 1 to 3, wherein the stiffnesses per unit width of layer R1, R2, for the first carcass layer and second carcass layer, respectively, are identical.

5. **Tyre (1)** for a heavy-duty vehicle of construction plant type according to any one of Claims 1 to 4, wherein the metal reinforcers (52, 62) of each carcass layer (50, 60) are multistrand rope cords of structure 1xN comprising a single layer of N strands wound in a helix, each strand comprising an internal layer of M internal threads wound in a helix and an external layer of P external threads wound in a helix around the internal layer.

6. **Tyre (1)** for a heavy-duty vehicle of construction plant type according to Claim 5, wherein N=3 or N=4.

7. **Tyre (1)** for a heavy-duty vehicle of construction plant type according to one of Claims 5 or 6, wherein M=1, 3, or 4.

8. **Tyre (1)** for a heavy-duty vehicle of construction plant type according to any one of Claims 5 to 7, wherein P=5, 6, 8 or 9.

9. **Tyre (1)** for a heavy-duty vehicle of construction plant type according to one of Claims 1 to 8, wherein an interior first carcass layer (60) comprises a main part (80) wrapped, within each bead, from the inside towards the outside of the tyre, around a bead wire nucleus (100) to form a turn-up (85), and an exterior second carcass layer (50) comprises a main part wrapped, at least partially within each bead, from the outside towards the inside of the tyre, around a bead wire nucleus (100).

10. **Tyre (1)** for a heavy-duty vehicle of construction plant type according to any one of Claims 1 to 8, wherein each carcass layer (50, 60) comprises a main part (90, 80) wrapped, within each bead, from the inside towards the outside of the tyre, around a bead wire nucleus (100) to form a turn-up (95, 85).

11. **Tyre (1)** according to any one of Claims 1 to 10, wherein the crown reinforcement (30) is made up of at least one layer comprising metal reinforcers coated in an elastomer compound and forming, with the circumferential direction (XX'), an angle A at most equal to 2.5° in terms of absolute value.

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5843583 A
- WO 2005014925 A
- WO 2007090603 A
- US 3542111 A
- GB 935755 A